# EUROPEAN PATENT SPECIFICATION

(11) **EP 2 813 136 B1**
(45) Date of publication and mention of the grant of the patent: **21.03.2018**
(21) Application number: 14170475.9
(22) Date of filing: 29.05.2014
(51) Int. Cl.: A01D 34/30, A01D 34/08

(54) **Device for abating vibrations in a cutter bar with alternating motion**
Vorrichtung zur Dämpfung von Schwingungen in einer Schneidleiste mit Hin- und Herbewegung
Dispositif pour réduire les vibrations dans une barre de coupe à mouvement alternatif

(30) Priority: 13.06.2013 IT MI20130969
(43) Date of publication of application: 17.12.2014
(73) Proprietor: BCS S.p.A., 20123 Milano (MI) (IT)
(72) Inventor: Vanone, Fabrizio Omodeo, 27036 Mortara-Pavia (IT)
(74) Representative: Giuli, Maurizio Mario Galdino

(56) References cited:
- EP-A2- 0 035 805
- US-A- 2 769 297
- US-A- 2 808 696
- US-A- 2 819 618
- US-B1- 6 314 707
- US-B1- 8 011 272

## Description

The present invention relates to a device for abating the vibrations of a cutter bar with alternating motion.

At present, in the field of cutting devices which use cutter bars with an alternating motion, in particular so-called mowers, there are problems connected with the vibrations.

Cutting devices of this type are in fact assembled on most mowers adopted by the user on foot for cutting grass, fodder and plants in general in both the professional field and as a hobby.

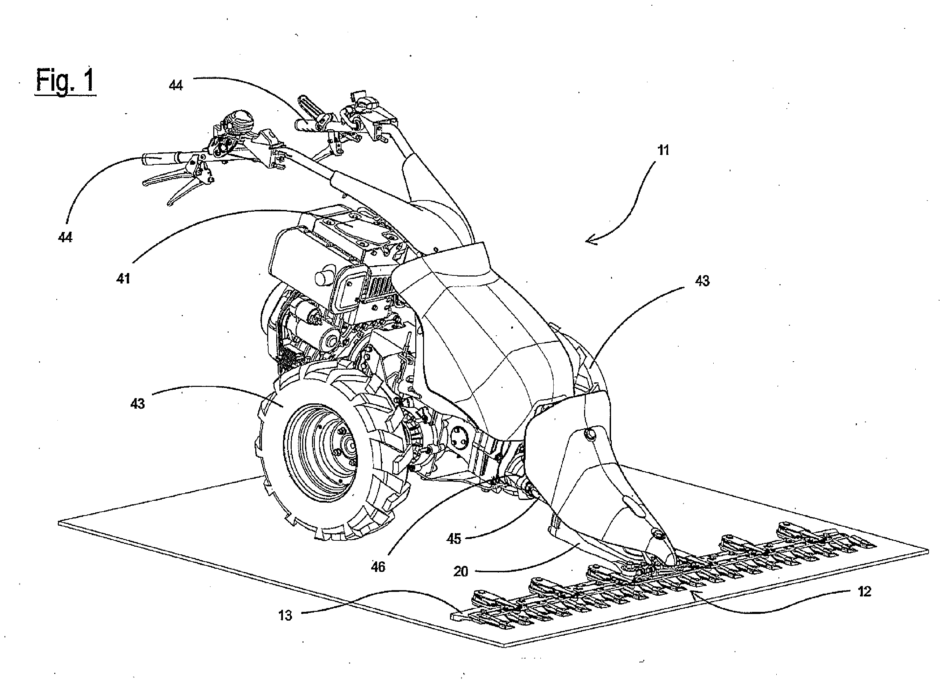

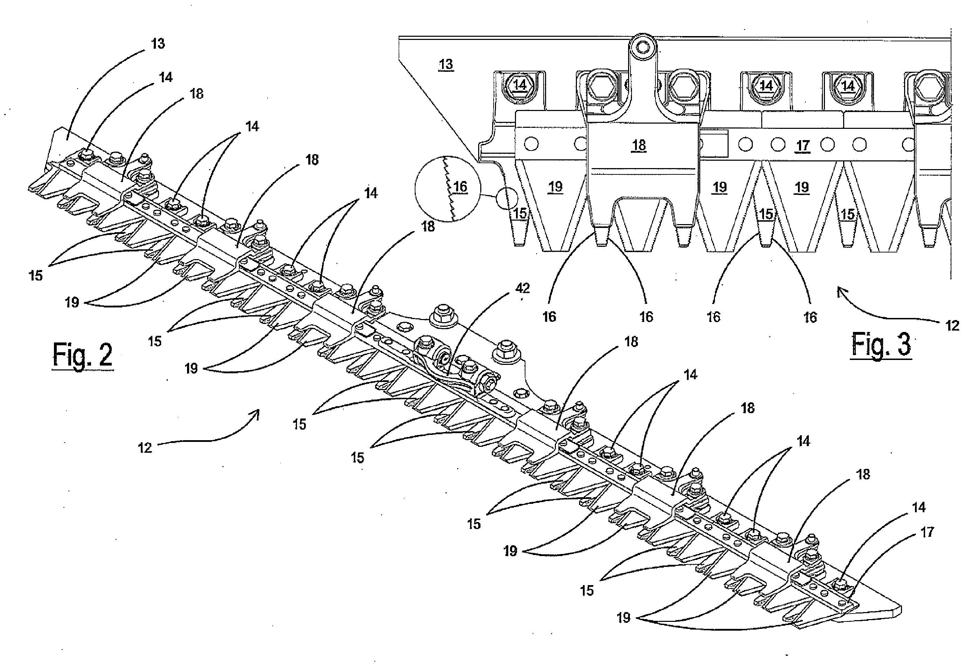

Figures 1 to 5 show the state of the art for these devices and their application in a mower 11. In particular, current cutter bars 12 are composed of a structural supporting part 13, known in the field as "guide bar", normally made of steel. This structural part 13 has a width equal to that to be cut and is made integral with the structure of the mower by means of a mechanical supporting and transmission group 20.

A certain number of cutting elements or teeth 15, having a pointed triangular form, are rigidly fixed to this supporting part or guide bar 13, for example by means of bolts 14, and contribute to forming the so-called comb.

The upper surface of these cutting elements 15, when constrained to the structural part 13, forms a plane which is composed of a certain number of teeth, having a triangular form, whose sides consist of lateral sharp edges. The sharp edges can be equipped with prominent teeth 16 to accentuate the withholding of blades of grass during the cutting. There can also be opposing tongues or other expedients (not shown) for improving the effectiveness of the cutting.

A blade 17 rests on the above-mentioned plane thus defined, which is held in close contact with it by a series of rigid or elastic retainers called blade-holders 18.

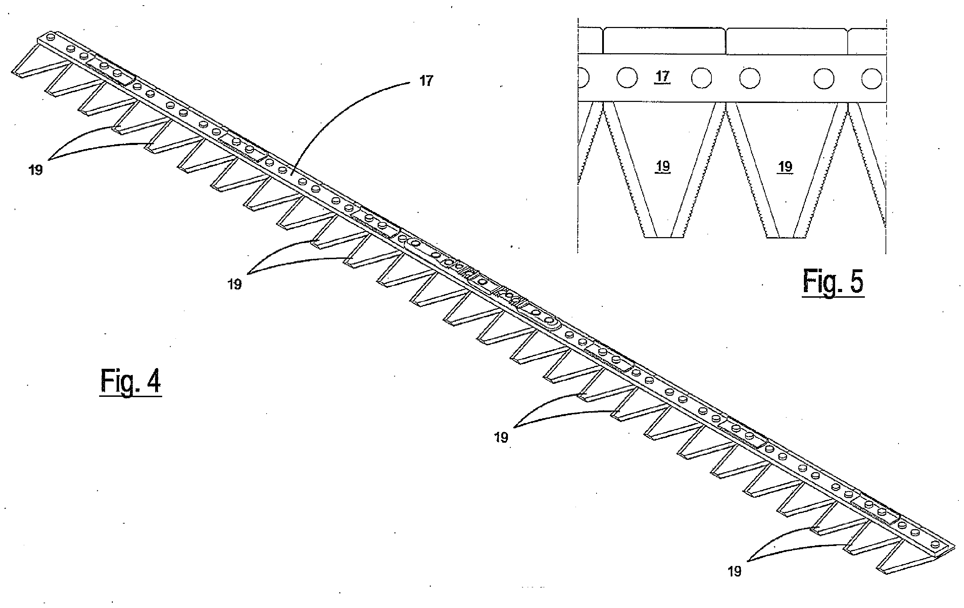

The blade 17 is normally made of steel and also has a certain number of cutting elements 19, or bladelets, having a triangular or trapezoidal shape with sharp cutting sides (figure 4).

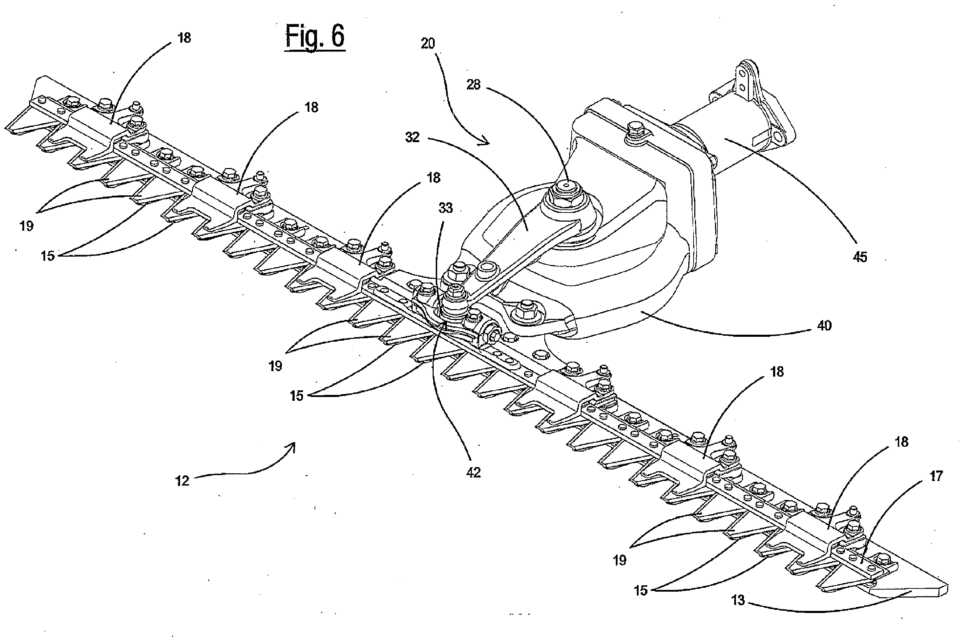

The cutting of the grass is effected through two movements: the cutter bar 12 moves forward in the grass pushed by the movement of the mower 11 with which it is integral and in this way, the blades of grass to be cut penetrate the spaces of the combs. A mechanical supporting and transmission group 20 (figure 6), also normally moved by a motor 41 (figure 1), generally endothermic, of the mower, contemporaneously carries the blade 17 and imparts an alternating movement with an appropriate frequency and amplitude to the same blade. Said mechanical supporting and transmission group 20 is rigidly connected to the guide bar 13 and connected to the blade 17 in the centre or at the sides with an articulated device 42 compatible with the transmission of the movement to be effected. In this way, the cutting bladelets 19 of the blade 17 pass alternatingly in correspondence with the spaces defined by the cutting elements 15 of the comb and effect the cutting with a procedure similar to that of scissors.

This cutting device and relative supporting and transmission group work extremely well, but are not without problems.

In order for the cutter bar 12 to be effective and functional, various indispensable physical characteristics of the blade 17, which is the active component of the tool, must in fact be taken into account.

The blade 17 must be sufficiently robust as to be able to effect the cutting and resist any possible occasional and unexpected impact and stress. It must also be relatively insensitive to wear so as to ensure a sufficient duration and satisfactory preservation of the cutting edge with time.

Finally, the cutter bar 12, and consequently the blade 17, must have a width which is coherent with the weight, power and preferential use of the mower 11 on which they must operate. Most professional or semi-professional mowers currently operate with bars having a weight ranging form 1 to 2 meters.

Finally, the blade 17 is connected to the supporting and transmission group 20 of the motion which moves it by means of a robust and adequately structured mechanical connection.

These requisites generate blades 17 having a significant mass, for example around 3 Kg per meter of width.

It is also essential, especially for professional use, for the cutting of plant blades to be sharp and precise. The plants would otherwise be damaged, reducing or jeopardizing the possibility of obtaining subsequent cuttings.

If the machine is used for cutting fodder for animal nutrition, an imprecise cutting will deteriorate the quality of the product, as it would produce anomalous fermentations reducing its quality and value.

A crucial parameter for obtaining this result is the relative velocity with which the cutting edge of the bladelets impacts the blades of grass forcing them against the cutting elements of the comb. Within certain limits, the greater this velocity, the better the cutting will be. The blade 17 must therefore move with an alternating motion with a high frequency, often in the order of 1,000 complete cycles per minute or even higher.

For physical reasons linked to both the blade itself and to the vegetation to be cut, the run must be at least a few centimetres, typically reaching values ranging from 5 to 10 centimetres.

The entity of the movement, together with the frequency of the strokes and mass of the blade, generates significant accelerations and therefore high inertial forces.

Mowers which use these cutter bars are typically equipped with only two wheels 43 at the end of the same axis, having the cutter bar 12 at one end and the handlebars 44 at the opposite end. The alternating force of inertia produces a momentum that the very structure of the machine amplifies and transforms into vibrations having a high intensity.

These vibrations are naturally harmful for the duration and mechanical reliability, but above all cause a marked deterioration in the ease of use, they damage the ergonomics, tiring the user, thus requiring more frequent and prolonged stops.

Strategies have been studied in various phases for preventing the propagation of these vibrations, which substantially consist in either insulating the sensitive parts or trying to neutralize the vibrations at their source.

It has so far been observed that insulating the remaining parts of the mower is particularly problematical as these vibrations are significant from an energy point of view and have a frequency which is such as to require excessively extensive movements of the insulating devices. These movements can often be incompatible with the use of the machine or simply cannot be obtained with mechanical devices having a reasonable cost. They would in any case continue to disturb the remaining mechanical parts rigidly connected to the mower.

Until now, so-called double-movement cutter bars have been developed, in which both the blade and the comb move with an alternating opposed motion. In this type of bar, the inertial forces are more balanced and the consequent vibrations reduced, even if not completely eliminated.

US 2 819 618 A is suitable only for lateral cutter bars. Moreover said device is largely open at the bottom and even completely open towards outside in its moving components, such as the mass of the counterweight, the components that determine the motion, the connecting and control rods of the cutter bar, etc.

A general objective of the present invention is to solve the above-mentioned drawbacks of the known art in cutter bars, in an extremely simple, economical and particularly functional manner.

A further objective of the present invention is to provide a device which is capable of eliminating or minimizing the inertial forces in a cutter bar of a mower during the operative movement of the cutting blade.

Another objective of the present invention is to provide a device for abating the vibrations in a cutter bar with alternating motion which maintains an optimum cutting function.

In view of the above objectives, according to the present invention, a device for abating the vibrations in a cutter bar with alternating motion, has been conceived, having the characteristics specified in the enclosed claims.

The structural and functional characteristics of the present invention and its advantages with respect to the known art will appear more evident from the following description, referring to the enclosed drawings, which, *inter alia,* show an embodiment of a device for abating the vibrations in a cutter bar with alternating motion produced according to the invention.

In the drawings:
- figures 1, 2, 3, 4 and 5 are schematic views which show a mower, a cutter bar and an enlarged detail thereof, a cutting blade and a detail thereof, produced according to the known art;
- figure 6 is a schematic perspective view of a cutter bar provided with a supporting and transmission group equipped with a device according to the present invention;
- figure 7 is an enlarged, partially sectional, perspective view of the device according to the invention shown in figure 6;
- figure 8 is a perspective view of part of the device of figure 7;
- figures 9 and 10 are plan views from below and above of the device of figure 8;
- figures 11, 12 and 13 are schematic views from below of operating phases of the previous device;
- figure 14 shows the route of trajectories of the elements shown in figures 9 and 10.

As previously specified, a mower 11 carries the cutter bar 12 by means of a supporting and transmission group of the motion 20.

The blade 17 is ultimately connected to the transmission group 20 of the motion by means of a robust and adequately structured mechanical connection.

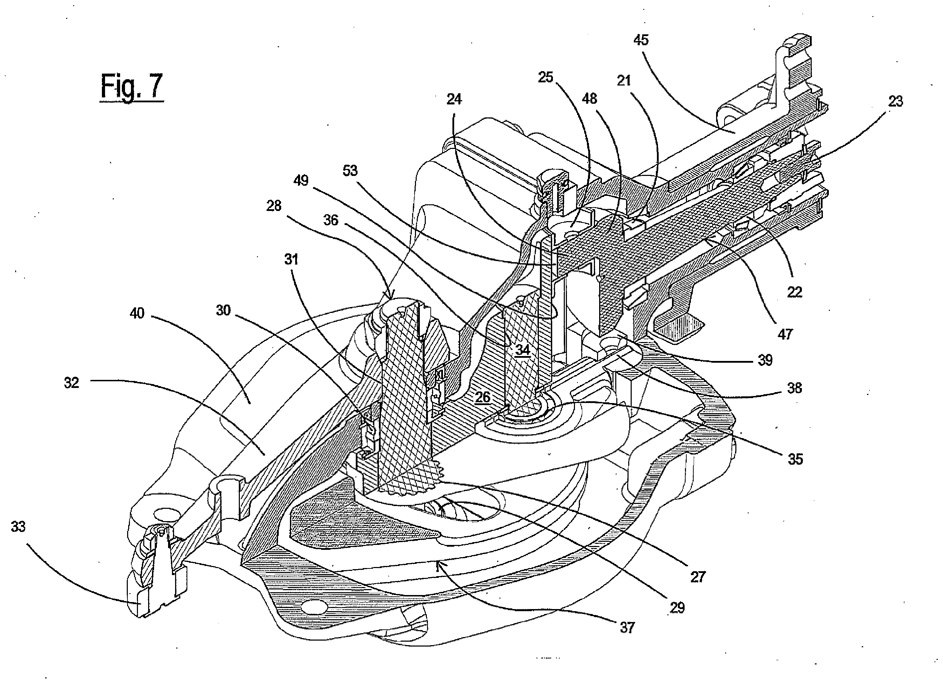

More specifically, as shown in figures 6 and 7, the supporting and transmission group of the motion 20 of the blade 17 of the cutter bar 12 is constrained to the front part of the mower 11 by means of a support 45 positioned in correspondence with a power takeoff 46 produced by means of a rotating shaft.

The support 45 is in fact hollow, it is coupled with a carter 40 for the whole device, and a horizontal shaft 47 supported by bearings 21 and 22, passes through it. The shaft 47 carries a joint 23 at its free end towards the interior, whereby it is rotated by the power takeoff 46 of the mower 11.

At the opposite end, the shaft 47 comprises, on one of its flanged ends 48, an eccentric pin 24 which is engaged in a hole 53 of a cylindrical barrel cursor 25. The cylindrical barrel cursor 25 is free to slide vertically in a cylindrical seat 49 of an internal crank 26.

The internal crank 26 is engaged, through a grooved coupling 27, with a lower end of a vertical shaft 28 supported by bearings 29 and 30 inside the carter 40, thus being able to oscillate around the shaft 28. Said vertical shaft 28 is engaged at the upper end, through a second grooved coupling 31, with a first end of an outer crank 32, which can therefore also oscillate around the shaft 28 like the internal crank 26.

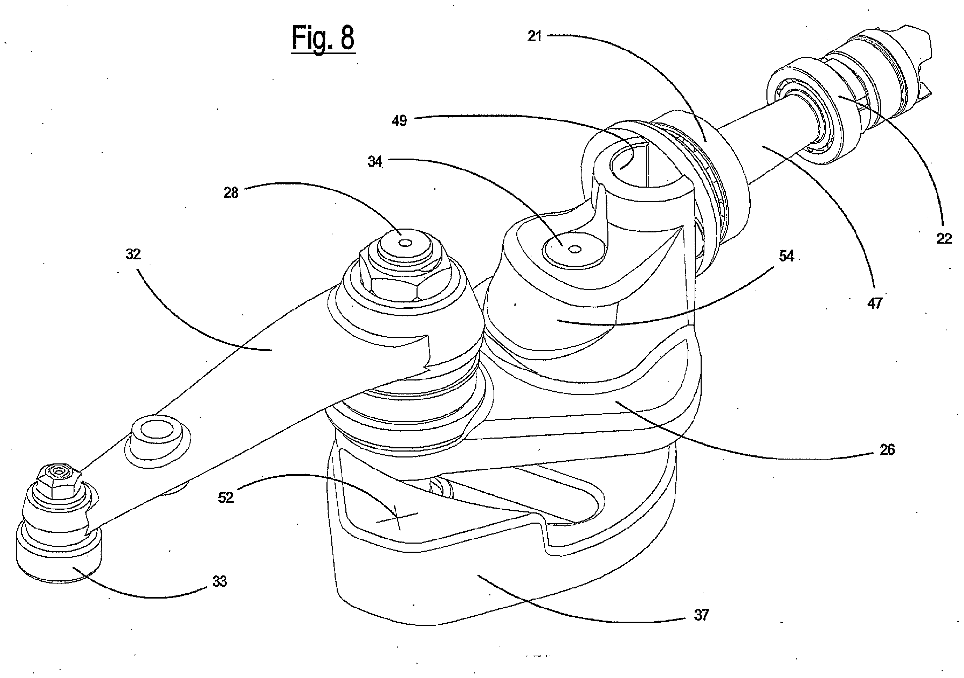

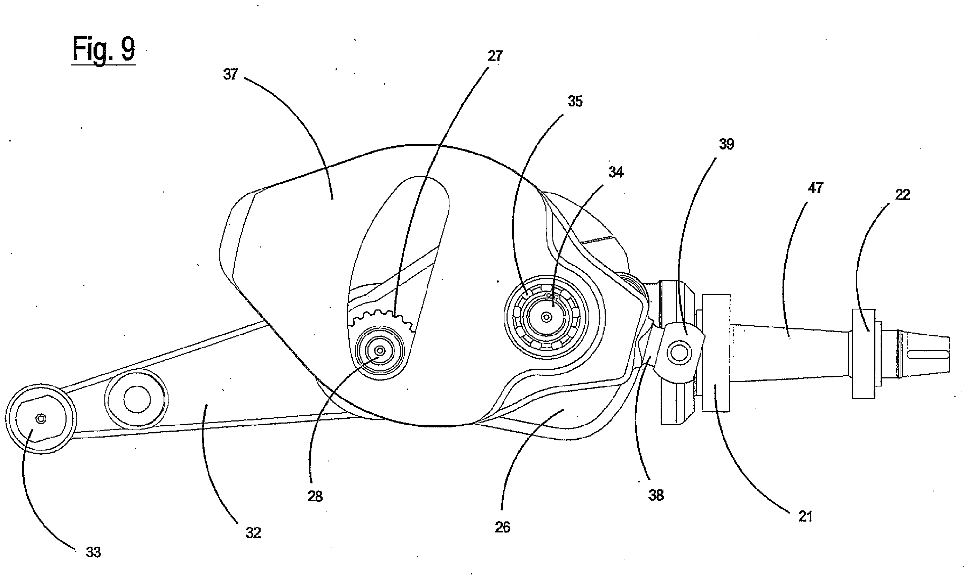

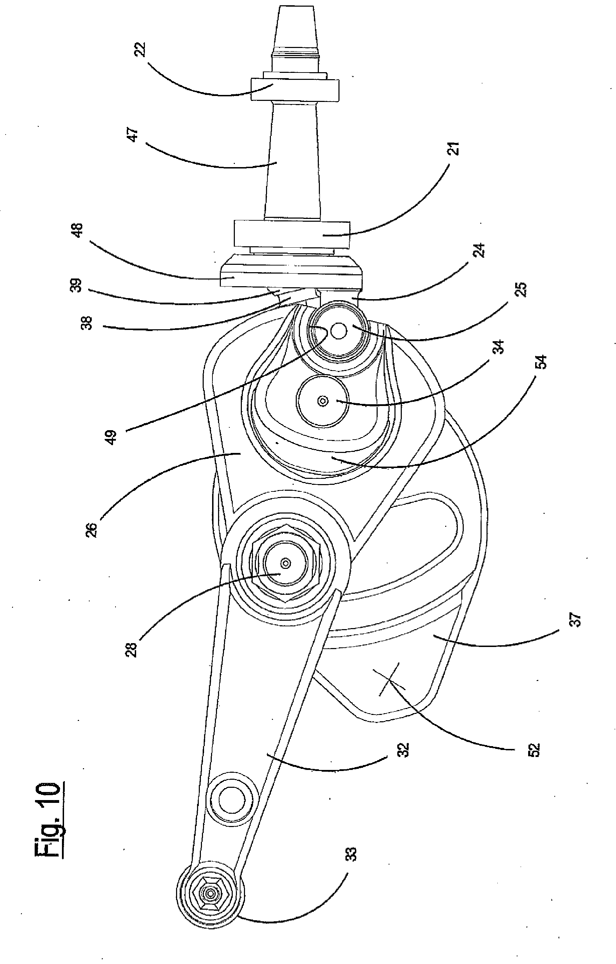

At one of its second opposite ends, the outer crank 32 carries a hinged roll 33, whereby it is connected to the blade 17 and is engaged in an articulated device 42 constrained above the same blade (figures 6-10).

This creates a transformation kinematic system of a rotating movement from the power takeoff 46 to a motion of the movable blade 17 which is flat with an alternating movement, in a direction transversal to the advance direction of the mower 11 and perpendicular to an axis of the power takeoff 46.

Furthermore, according to the present invention, on the internal crank 26, there is a pass-through hole 36, whose upper end has an enlarged diameter in which there is an additional pin 34 which acts as a movable fulcrum. The additional pin 34 supports, by means of a pair of bearings 35, a balancing mass 37 which is free to oscillate. Said balancing mass 37 has an extension 38 at the rear, which is inserted in a cylindrical barrel cursor 39, which acts as a fixed fulcrum. The cylindrical barrel cursor 39 is free to slide vertically and rotate in a cylindrical seat 51 situated in the carter 40. This coupling allows both angular and axial movements between the parts and creates a further kinematic system for the alternating movement of the balancing mass 37 in a direction opposite to that of the movable blade 17, wherein this latter kinematic system is associated with and moved by the above-mentioned first kinematic system.

In particular, the form of the balancing mass 37 is such that the barycentre is as close as possible to the blade 17 of the cutter bar 12, indicated for example in 52.

As already mentioned, the whole mechanism of the device is enclosed inside the casting of the supporting carter 40 which does not create any encumbrance. A possible encumbrance would in fact disturb the cutting and discharging of the grass, and the presence of this carter 40 maintains an indispensable lubrication and preserves the components from the action of contaminating agents.

To ensure the effectiveness of the present invention, the position of the balancing mass 37 and the relative movement must satisfy some particular conditions.

The mass 37 must be positioned as close as possible to the blade 17 so that the residual torque is minimum, due to the fact that the lines of action of the two forces of inertia are not perfecting coinciding.

The movement of the balancing mass 37 must be as straight as possible, so as to generate a force of inertia as parallel as possible to the force of inertia due to the blade 17.

The product of the mass for the run of the balancing mass must be as close as possible to the value of the same product between the mass and run of the blade.

These requirements are in contrast with the necessity of allowing the cut grass to be discharged immediately behind the blade 17. If an excessively voluminous mass were positioned close to the blade 17, the cut grass could not be discharged and would accumulate very rapidly, creating an obstacle for the cutting.

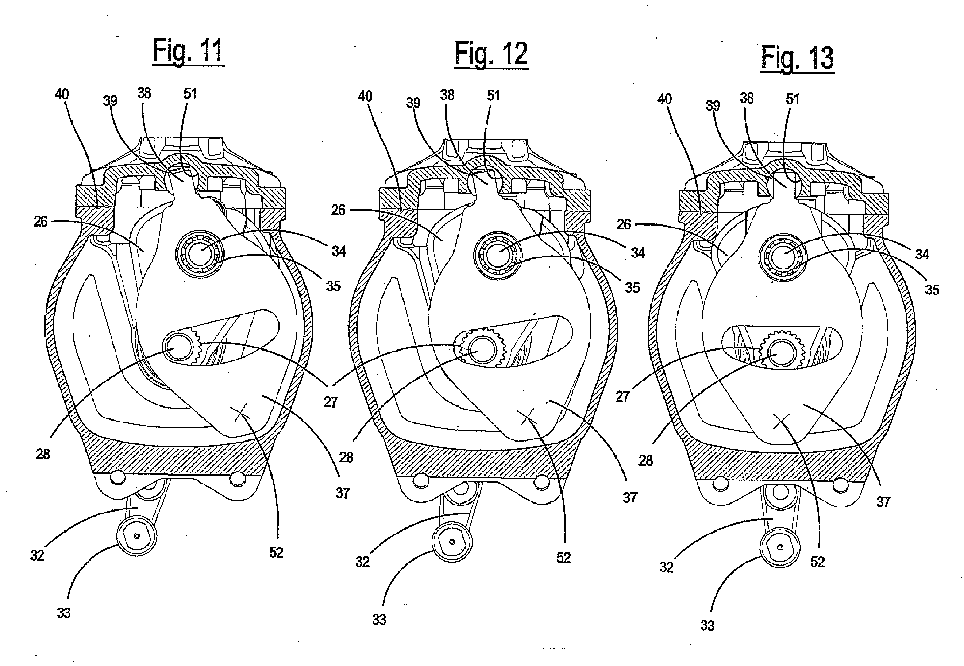

The movement of the barycentre is advantageously not circular as it derives from the composition of two opposed circular movements and this directs the trajectory towards a straight movement that would be optimum without there being any further complications in the mechanism. The motion of the barycentre 52 in figures 11 to 13 derives from the composition of two opposite arcs of circumference.

The analogous movement of the additional pin 34, which acts as a movable fulcrum with an opposite concavity, superimposes the circular trajectory described, of the oscillating mass 37 around the fixed fulcrum defined by the cylindrical barrel cursor 39. In this way, the resulting trajectory is more similar to the straight trajectory of the blade.

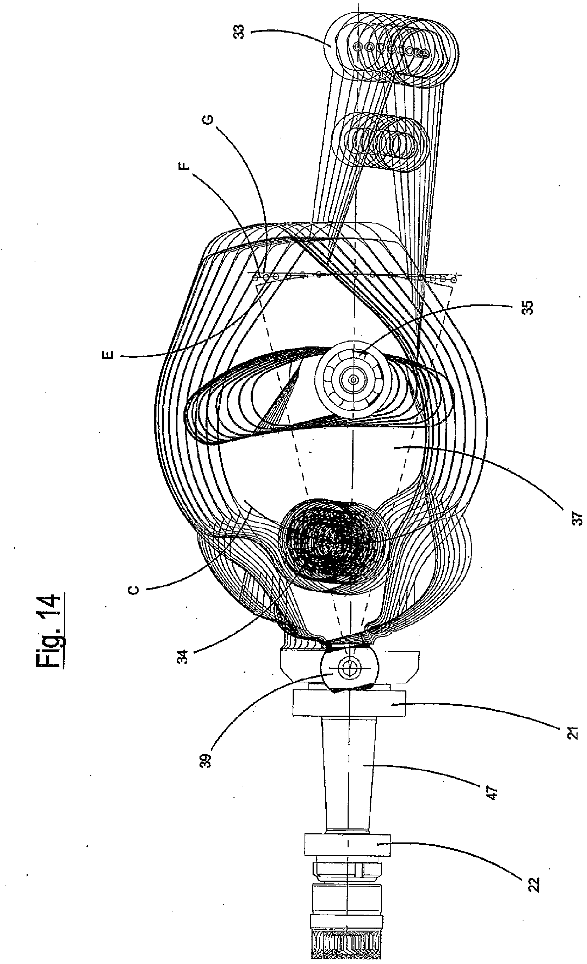

Figure 14 shows the path of the trajectories as referred to above. Said figure 14 provides a clearer illustration of the fixed fulcrum 39 of the oscillating mass 37 and the movable fulcrum 34 which entrains the same oscillating mass 37.

C indicates a trajectory with an arc of circumference of the same movable fulcrum 34.

The barycentre 52 of the oscillating mass 37 would move around a line E (indicated by a dotted line) with a curved trajectory, if it were to simply oscillate around the fixed fulcrum 39.

Contrarily and advantageously, on the other hand, according to the present invention, the trajectory of the barycentre 52 is indicated with the continuous line F created by the presence of the second kinematic system which is extremely close to an ideal straight trajectory indicated with G.

It can be clearly seen that, only by composing the movements, an oscillating mass 37 is obtained, which moves constrained to the pins with an almost straight motion.

This increases its efficacy as the blade 17 moves with an absolutely straight motion.

In order to allow this dual movement, the rear extension 38 of the balancing mass 37 and the presence of the cylindrical barrel cursor 39, free to slide vertically in the cylindrical seat 51 situated in the carter 40, allow to some extent both the rotation and translation of the balancing mass 37, which is all clearly illustrated in the functioning phases of figures 11 to 13.

The mass 37 oscillates around the fixed fulcrum 39 moved by the movable fulcrum 34 positioned on the internal crank 26. The distance between the two fulcra is much less than that between the fulcrum 39 and the barycentre 52 and creates a lever effect. In this way, the movement of the barycentre 52 is considerably amplified, as it can effect a significant increase in accelerations and consequently in the balancing inertial effect, even without using excessively high and encumbering masses 37.

In a preferred optional embodiment, there can also be the presence of a second balancing mass 54 which can be positioned on the first internal crank 26 which contributes even more to eliminating the vibrations that can arise due to the motion inversions, increasing the benefits of the balancing mass 37 mentioned above positioned on the additional kinematic system.

It can therefore be observed how, according to the invention, the strategy of neutralizing the vibrations from the source has been created for preventing the diffusion of the same vibrations.

This avoids having to insulate some of the parts of the mower, which is particularly problematical as these vibrations are significant from the point of view of energy, but with a frequency which requires excessively extensive movements of the insulation devices. These movements can often be incompatible with the use of the machine or simply cannot be obtained with mechanical devices having an acceptable cost. They would in any case continue to disturb the remaining mechanical parts rigidly connected to the machine itself.

The present invention has identified a device which neutralizes the force which creates the vibratory motion, as it arises. The effect has therefore been obtained by using a mass having an appropriate value, which is moved in an alternating motion in counter-phase against the blade with an amplitude calculated so that most of the alternating forces of inertia are cancelled.

The vibratory level is thus reduced on the handlebars, structures and driving controls with a marked increase in the ergonomics and ease of use. As the vibratory forces are cancelled at the source, the vibrations are reduced in the whole machine, protecting the mechanical components from stress which can jeopardize their reliability.

The supporting functions of the bar, blade drive and movement of the balancing masses are advantageously integrated and contained in a single carter 40 having an adequate form with all the internal components in an oil bath. The resulting mechanism is suitable for professional use as it is airtight, insensitive to powder and contaminating agents typical of the environment of use. The constant lubrication improves the reliability of the mechanism and dissipation of the heat generated during functioning.

In addition, the annulment at the source of the phenomenon makes the device suitable for all machine configurations which can have different mass distributions. The device itself must only be dimensioned in relation to the cutter bar that it must activate and can be designed for being adapted to a vast range of widths of the bar and consequently blade mass.

The objective indicated in the preamble of the description has therefore been achieved.

The forms of the structure for the embodiment of a device of the invention, as also the materials and assembly modes, can obviously differ from those shown for purely illustrative and non-limiting purposes in the drawings.

The protection scope of the invention is therefore delimited by the enclosed claims.

## Claims

1. A device for abating vibrations in a cutter bar (12) with alternating motion coupled with a supporting and transmission group (20) connected to a power takeoff (46) of the mower (11), said supporting and transmission group (20) comprising a kinematic transformation system of a rotary motion coming from said power takeoff (46) into a motion of the movable blade (17) which is flat with an alternating movement, in a transversal direction with respect to the advance direction of the mower and perpendicular to an axis of the power takeoff (46), wherein said movable blade is kept in engagement on cutting elements (15) constrained to said supporting and transmission group (20), wherein a further second kinematic system is associated with said first kinematic transformation system of the rotary motion into a flat motion with an alternating movement of said movable blade (17), for the alternating backwards and forwards movement of a balancing mass (37) in an opposite direction to that of said movable blade (17), wherein said second further kinematic system is moved by said first kinematic system, being both said first and second kinematic systems contained in a single carter (40) in an oil bath, said power takeoff (46) is connected by means of an eccentric pin (24) to a cylindrical seat (49) of a crank (26, 32) of which a free end is rotatingly connected (33, 42) to said movable blade (17), said oscillating mass (37) of said second kinematic system being hinged (in 34) in an intermediate position of said crank (26, 32) and constrained at one of its ends around a fixed fulcrum (39) of said containment carter (40), **characterized in that** said fixed fulcrum comprises a cylindrical barrel cursor (39) which is free to slide vertically and rotate in a cylindrical seat (51) situated in said carter (40) and said crank comprises an internal crank (26), which is engaged with a shaft (28) supported (in 29 and 30) inside said carter (40), and an outer crank (32) constrained on one side to said shaft (28) and on the other side connected by means of a roll (33) to an articulated device (42) constrained above said movable blade (17).

2. The device according to claim 1, **characterized in that** said balancing mass (37) has a form which is such as to have a barycentre (52) as close as possible to said movable blade (17) of the cutter bar (12).

3. The device according to claim 2, **characterized in that** said barycentre (52) of said balancing mass (37) during its oscillation follows an essentially straight trajectory.

## Patentansprüche

1. Vorrichtung zum Dämpfen von Schwingungen in einem Schneidbalken (12) mit alternierender Bewegung, der mit einer Stütz- und Übertragungsgruppe (20) gekoppelt ist, die mit einem Zapfwellenantrieb (46) des Mähers (11) verbunden ist, wobei die Stütz- und Übertragungsgruppe (20) ein kinematisches Umwandlungssystem von einer Drehbewegung, die von dem Zapfwellenantrieb (46) kommt, in eine Bewegung der beweglichen Klinge (17), welche eben ist, mit einer alternierenden Bewegung in einer Querrichtung mit Bezug auf die Fortschrittsrichtung des Mähers und senkrecht zu einer Achse des Zapfwellenantriebs (46) umfasst, wobei die bewegliche Klinge in Eingriff an Schneidelementen (15) gehalten ist, die an der Stütz- und Übertragungsgruppe (20) festgespannt sind, wobei ein weiteres zweites kinematisches System dem ersten kinematischen Umwandlungssystem der Drehbewegung in eine ebene Bewegung mit einer alternierenden Bewegung der beweglichen Klinge (17) für die alternierende Hin- und Herbewegung einer Ausgleichsmasse (37) in einer entgegengesetzten Richtung zu der der beweglichen Klinge (17) zugeordnet ist, wobei das zweite weitere kinematische System durch das erste kinematische System bewegt wird, wobei sowohl das erste als auch das zweite kinematische System in einem einzigen Transporteur (40) in einem Ölbad enthalten sind, wobei der Zapfwellenantrieb (46) mittels eines Exzenterstifts (24) mit einem zylindrischen Sitz (49) einer Kurbel (26, 32) verbunden ist, von der ein freies Ende mit der beweglichen Klinge (17) drehbar verbunden ist (33, 42), wobei die oszillierende Masse (37) des zweiten kinematischen Systems (in 34) an einer Zwischenposition der Kurbel (26, 32) schwenkbar ist und an einem ihrer Enden um einen festen Drehpunkt (39) des Behältertransporteurs (40) herum eingespannt ist, **dadurch gekennzeichnet, dass** der feste Drehpunkt einen zylindrischen Trommelfinger (39) umfasst, der frei ist, um vertikal zu gleiten und in einem zylindrischen Sitz (51) zu rotieren, der in dem Transporteur (40) gelegen ist, und die Kurbel eine interne Kurbel (26) umfasst, die mit einer Welle (28) in Eingriff steht, die (in 29 und 30) im Inneren des Transporteurs (40) abgestützt ist, und eine äußere Kurbel (32), die auf einer Seite an der Welle (28) festgespannt ist und auf der anderen Seite mittels einer Rolle (33) mit einer angelenkten Einrichtung (42) verbunden ist, die oberhalb der beweglichen Klinge (17) festgespannt ist.

2. Vorrichtung nach Anspruch 1, **dadurch gekennzeichnet, dass** die Ausgleichsmasse (37) eine Form aufweist, die derart ist, dass sie einen Schwerpunkt (52) so nahe wie möglich bei der beweglichen Klinge (17) des Schneidbalkens (12) aufweist.

3. Vorrichtung nach Anspruch 2, **dadurch gekennzeichnet, dass** der Schwerpunkt (52) der Ausgleichsmasse (37) während ihrer Oszillation einer im Wesentlichen geraden Bahn folgt.

## Revendications

1. Un dispositif pour réduire les vibrations dans une barre de coupe (12) à mouvement alternatif couplée à un groupe de support et de transmission (20) relié à une prise de force (46) de la faucheuse (11), ledit groupe de support et de transmission (20) comprenant un système de transformation cinématique d'un mouvement rotatif provenant de ladite prise de force (46) en un mouvement de la lame mobile (17) qui est plate avec un mouvement alternatif, dans une direction transversale par rapport à la direction de marche de la faucheuse et perpendiculaire à un axe de la prise de force (46), ladite lame mobile étant maintenue en prise avec des éléments de coupe (15) solidarisés audit groupe de support et de transmission (20), un second système cinématique supplémentaire étant associé audit premier système de transformation cinématique du mouvement rotatif en un mouvement à plat avec un mouvement alternatif de ladite lame mobile (17), pour le mouvement alternatif vers l'arrière et vers l'avant d'une masse d'équilibrage (37) dans une direction opposée à celle de ladite lame mobile (17), ledit second système cinématique supplémentaire étant déplacé par ledit premier système cinématique, lesdits premier et second systèmes cinématiques étant contenus tous les deux dans un carter unique (40) dans un bain d'huile, ladite prise de force (46) étant reliée au moyen d'une broche excentrique (24) à un siège cylindrique (49) d'une manivelle (26, 32) dont une extrémité libre est reliée en rotation (33, 42) à ladite lame mobile (17), ladite masse oscillante (37) dudit second système cinématique étant articulée (en 34) dans une position intermédiaire de ladite manivelle (26, 32) et solidarisée à l'une de ses extrémités autour d'un pivot fixe (39) dudit carter (40), **caractérisé en ce que** ledit pivot fixe comprend un curseur à barillet cylindrique qui est libre de coulisser verticalement et de tourner dans un siège cylindrique (51) situé dans ledit carter (40), et ladite manivelle comprenant une manivelle intérieure (26), qui coopère avec une tige (28) supportée (en 29 et 30) à l'intérieur dudit carter (40) et une manivelle extérieure (32) solidarisée à l'un des côtés de ladite tige (28) et, à l'autre côté, reliée au moyen d'une douille (33) au dispositif articulé (42) solidarisé au-dessus de ladite lame mobile (17).

2. Le dispositif selon la revendication 1, **caractérisé en ce que** ladite masse d'équilibrage (37) a une forme qui est conçue de façon à avoir un barycentre (52) aussi proche que possible de ladite lame mobile (17) de la barre de coupe (12).

3. Le dispositif selon la revendication 2, **caractérisé en ce que** ledit barycentre (52) de ladite masse d'équilibrage (37) suit, durant l'oscillation de celle-ci, une trajectoire sensiblement rectiligne.
